# EUROPEAN PATENT APPLICATION

(11) **EP 4 403 533 A1**
(43) Date of publication of application: **24.07.2024**
(21) Application number: 23152129.5
(22) Date of filing: 18.01.2023
(51) Int. Cl.: C04B 7/153, C04B 24/12, C04B 28/04, C04B 28/08, C04B 40/00

(54) **ACTIVATION OF GROUND GRANULATED BLAST FURNACE SLAG, ADMIXTURE FOR THE ACTIVATION OF GROUND GRANULATED BLAST FURNACE SLAG, AND ACTIVATED HYDRAULIC COMPOSITION**

(71) Applicant: Sika Technology AG, 6340 Baar (CH)
(72) Inventor: CHITSA, Collins, Stevenage, SG2 0LZ (GB); HINCHCLIFFE, Peter, Welwyn, AL7 4EZ (GB); LISKA, Martin, Cambridge, CB23 8ST (GB); EVANS, Craig, Farnworth Bolton, BL4 7JN (GB); WOMBACHER, Franz, 8916 Jonen (CH)
(74) Representative: Sika Patent Attorneys

(57) **Abstract**

The present invention relates to methods for activating ground granulated blast furnace slag (GGBS) by an admixture comprising triethanolamine and diethanolisopropanolamine. The present invention also relates to admixtures comprising triethanolamine and diethanolisopropanolamine. Also, the present invention relates to hydraulic binder compositions comprising GGBS, optionally Portland cement, and triethanolamine and diethanolisopropanolamine.

## Description

### Technical Field

The present invention relates to the activation of ground granulated blast furnace slag (GGBS) by an admixture comprising triethanolamine and diethanolisopropanolamine. Especially, the present invention relates to the activation of hydraulic compositions, such as blended cements, having a high content of GGBS.

### Background of the invention

Many building materials, especially concrete and mortars, rely on hydraulic binders. The most abundant hydraulic binders are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to at least partially replace cements as binders from building materials.

One possibility is the use of materials with cementitious properties, pozzolans and/or latent hydraulic materials as cement replacement. An especially appealing material of this kind is slag as it is available as a by-product of various metallurgical process, especially iron and steelmaking, in large quantities.

One specific type of slag is ground granulated blast furnace slag (GGBS). GGBS is obtained by quenching molten iron slag from a blast furnace in water or steam, to produce a glassy, granular product that is then dried and ground into a fine powder. It is known that GGBS can be used to manufacture blended cements.

However, especially at higher levels of GGBS in blended cements, for example levels of 50 - 80 w% of GGBS and above, a delayed set, delayed strength development, and lower strength measured at conventional time frames of 28 days is often observed when hardening such blended cements for example as part of a concrete formulation. Thus, especially at high levels of GGBS in blended cements, the strength development needs to be accelerated.

It is known that alkanolamines can act as activators for various types of slags. For example, WO 2022/238376 (Sika Technology AG) discloses the possible use of various alkanolamines to activate GGBS or basic oxygen furnace slag (BOF) which is a type of steelmaking slag.

There is a continuing need for activators of GGBS in blended cements, especially where the content of GGBS in such blended cement is high.

### Summary of the invention

It is an objective of the present invention to provide methods for activation of ground granulated blast furnace slag. It is another objective of the present invention to provide activators for ground granulated blast furnace slag. It is especially an objective of the present invention to provide activation methods and activators for ground granulated blast furnace slag in blended cements, in particular in blended cements with a high content of GGBS. It is a further objective of the present invention to provide activated hydraulic binder compositions comprising ground granulated blast furnace slag, especially comprising blended cements with a high content of ground granulated blast furnace slag.

It has been found that a combination of triethanolamine and diethanolisopropanolamine is particularly suitable for the activation of ground granulated blast furnace slag, especially when used in blended cements with high content of ground granulated blast furnace slag. There is a synergistic effect on activation of GGBS when triethanolamine and diethanolisopropanolamine are used in combination. Hydraulic binder compositions comprising GGBS and comprising triethanolamine and diethanolisopropanolamine show a surprisingly fast development of strength at early age, for example after 1d. In particular, the combined use of triethanolamine and diethanolisopropanolamine to activate GGBS results in the following advantages:
1) Improvement in early strength
2) Increase in ultimate strength
3) Improvement of initial setting time
4) Possible reduction of Portland clinker in blended cements

The objectives of the present invention are therefore solved by the subject of claim 1.

Further aspects of the present invention are the subject of independent claims. Preferred embodiments of the present invention are the subject of dependent claims.

### Ways for carrying out the invention

In a first aspect the present invention relates to a method for activating ground granulated blast furnace slag, said method comprising the steps of
a) providing a ground granulated blast furnace slag,
b) providing an admixture comprising triethanolamine and diethanolisopropanolamine, and
c) mixing said ground granulated blast furnace slag and said admixture.

The term "activating" within the present context refers to the ability to increase the reactivity of a mixture comprising ground granulated blast furnace slag (GGBS) with water. An activation or increase of reactivity in this case can be measured, for example, by the determination of strength after a defined time. A suitable method is, for example, the measurement of compressive strength according to standard EN 12390-3. In such method, an activated mixture comprising GGBS and water shows a higher compressive strength within a defined time after mixing, for example after 1d or after 3d, as compared to the same mixture without any activator added. Another suitable method is, for example, the measurement of initial setting time. Initial setting time can, for example, be measured by ultrasonic pulse velocity. In such method, an activated mixture comprising GGBS and water shows a reduced initial setting time as compared to the same mixture without any activator added.

A ground granulated blast furnace slag (GGBS) within the present context is obtained by quenching molten iron slag from a blast furnace in water or steam, to produce a glassy, granular product that is then dried and ground into a fine powder. According to embodiments, GGBS has a Blaine fineness of between 2000 - 12000 cm²/g, preferably between 4000 - 6000 cm²/g or 6000 - 8000 cm²/g. Blaine fineness can be measured according to standard EN 196-6. According to embodiments, the glassiness of a GGBS of the present invention is at least 80%, preferably at least 90%. According to embodiments, a GGBS of the present invention has a content of SiO₂ of 34 - 40 w%, a content of CaO of 34 - 37 w%, a content of Al₂O₃ of 8 - 12 w% and has a weight ratio of (CaO + MgO) / (Al₂O₃ + SiO₂) of between 0.8 - 1.1.

According to embodiments, the admixture comprising triethanolamine and diethanolisopropanolamine is a one component admixture. A one component admixture means that both, triethanolamine and diethanolisopropanolamine as well as optionally further chemicals, are present in one receptable. Preferably, in this case, the admixture is a homogeneous mixture such as a solution or dispersion. Further chemicals can for example be solvents, especially water. Providing the admixture comprising triethanolamine and diethanolisopropanolamine as a one component admixture has the advantage that dosage is simple and the risk of overor under-dosage of triethanolamine or diethanolisopropanolamine is reduced.

According to embodiments, the admixture comprising triethanolamine and diethanolisopropanolamine is a multi-component admixture, especially is a two component admixture. A two component admixture means that triethanolamine and diethanolisopropanolamine are present in two spatially separated receptables. Further chemicals may additionally be present in one or both components of a two component admixture. Further chemicals can for example be solvents, especially water. Providing the admixture comprising triethanolamine and diethanolisopropanolamine as a two component admixture has the advantage that dosage of triethanolamine and/or diethanolisopropanolamine can be adjusted independently according to needs.

Mixing of the GGBS and the admixture comprising triethanolamine and diethanolisopropanolamine is not specifically limited. In particular, mixing can be done by any means known to the person skilled in the art.

According to embodiments, GGBS and the admixture comprising triethanolamine and diethanolisopropanolamine are mixed during the grinding of granulated blast furnace slag. Therefore, the admixture comprising triethanolamine and diethanolisopropanolamine is added to unground granulated blast furnace slag and subsequently ground, for example in a ball mill or a vertical roller mill. In addition or in the alternative, the admixture comprising triethanolamine and diethanolisopropanolamine may also be added to granulated blast furnace slag during the grinding.

According to embodiments, GGBS and the admixture comprising triethanolamine and diethanolisopropanolamine are mixed by means of a concrete mixer, a tumbling vessel, a mixing can, a propeller mixer, a ploughshare mixer, or an air agitated chamber. Especially, the GGBS and the admixture comprising triethanolamine and diethanolisopropanolamine may be mixed during production of a hydraulic binder or a hydraulic binder composition such as dry mortar, wet mortar, or concrete.

Preferably, mixing is done at a normal pressure of 1 atm and temperatures between 15 - 50 °C. However, other pressure and temperatures are possible as well.

According to embodiments, in a method of the present invention, the ground granulated blast furnace slag forms part of a hydraulic binder.

A hydraulic binder within the present context is a material consisting of at least one hydraulic binder and/or latent hydraulic binder.

A hydraulic binder in particular stands for substances that harden because of chemical reactions with water producing hydrates. Preferably, the hydrates produced are not water-soluble. Preferably, the hydraulic binder additionally comprises a cement, especially Portland cement. Portland cement especially is a cement according to standard EN 197-1, in particular a cement of type CEM I. CEM I is also called Ordinary Portland Cement (OPC).

Thus, in particular, in a method of the present invention the hydraulic binder comprises or consists of ground granulated blast furnace slag and Portland cement, especially CEM I according to EN 197-1.

According to embodiments, in a method of the present invention, a ratio of ground granulated blast furnace slag in said hydraulic binder is at least 36 w%, preferably at least 50 w%, more preferably at least 70 w%, especially at least 80 w%, relative to the total dry weight of the hydraulic binder.

According to particularly preferable embodiments, the hydraulic binder consists of a mixture of OPC and GGBS in a weight ratio of 3:7. According to embodiments, the weight ratio of OPC to GGBS may also be lower than 3:7, for example 1:4 or lower or even 1:9 or lower.

According to embodiments, in a method of the present invention, a ratio of ground granulated blast furnace slag in said hydraulic binder is not more than 90 w%, preferably not more than 80 w%, relative to the total dry weight of the hydraulic binder.

A latent hydraulic binder is a binder that can harden because of chemical reactions with water producing hydrates only very slowly. Typically, latent hydraulic binders need some activator for the hardening.

In another aspect the present invention relates to an admixture comprising triethanolamine and diethanolisopropanolamine. Especially, such admixture is suitable to be used in a method of the present invention. Therefore, all embodiments described above also relate to this aspect. Especially the admixture can be a onecomponent or a multi-component, preferably two-component, admixture as described above.

According to embodiments, the weight ratio of triethanolamine to diethanolisopropanolamine in an admixture of the present invention is between 10:1 - 1:10, preferably between 3:1 - 1:3, especially is 3:4.

It is possible that an admixture of the present invention comprises other constituents besides triethanolamine (TEA) and diethanolisopropanolamine (DEIPA). Especially such other constituents can be a solvent, preferably water, defoamers, biocides, thickeners, plasticizers, superplasticizers, retarders, and/or cement accelerators other than alkanolamines. Accelerators other than alkanolamines can be calcium nitrite, calcium nitrate, sodium nitrate, sodium nitrite, calcium chloride, sodium thiocyanate, alkali metal silicate, alkali metal hydroxide, alkali metal carbonate, aluminum sulfate, sodium silicate, and/or hydrated lime. A suitable retarder is for example hydroxycarboxylic acid such as citric acid, lactic acid, or tartaric acid, or sodium gluconate. An admixture of the present invention may thus contain triethanolamine and diethanolisopropanolamine, at least one of calcium nitrite, calcium nitrate, calcium chloride, sodium thiocyanate, alkali metal silicate, alkali metal hydroxide, alkali metal carbonate, and aluminum sulfate, optionally hydroxycarboxylic acid such as citric acid, lactic acid, or tartaric acid, or sodium gluconate and water. One particularly suitable admixture of the present invention comprises triethanolamine, diethanolisopropanolamine, hydrocarboxylic acid, especially lactic acid, sodium nitrate, sodium thiocyanate, optionally biocides, and water. Another particularly suitable admixture of the present invention comprises triethanolamine, diethanolisopropanolamine, hydrocarboxylic acid, especially lactic acid, sodium nitrate, sodium thiocyanate, a polycarboxylate ether, optionally biocides, and water.

Such preferred admixtures can also be advantageously used in a method as described above. According to embodiments, the admixture used in a method of the present invention additionally contains at least one of sodium thiocyanate, sodium nitrate, hydrocarboxylic acid, especially lactic acid, and polycarboxylate ether.

According to embodiments, the ratio of triethanolamine in an admixture of the present invention is 3 w% and the weight ratio of diethanolisopropanolamine is 3 w%, preferably is 4 w%.

The combined use of triethanolamine and diethanolisopropanolamine shows a synergistic activation of GGBS. Especially, the combined use of triethanolamine and diethanolisopropanolamine shows a synergistic activation of GGBS in blended cements, preferably shows a synergistic activation of hydraulic binders comprising or consisting of GGBS and Portland cement.

Without wishing to be bound by theory it is believed that a mixture of triethanolamine and diethanolisopropanolamine is particularly effective in enhancing the hydration of aluminate phases (C3A, C4AF) from GGBS and the hydration of alite (C3S) as well as in promoting the formation of ettringite (Aft). A possible mode of action is the attack of glassy phases of the GGBS by the triethanolamine and diethanolisopropanolamine thereby enhancing the mobility of elements from GGBS and into solution.

In another aspect the present invention relates to a hydraulic binder composition comprising
(a1) at least one ground granulated blast furnace slag,
(a2) optionally Portland cement,
(b) triethanolamine,
(c) diethanolisopropanolamine,
(d) optionally aggregates and/or fillers, and
(e) optionally further admixtures.

A hydraulic binder composition comprises at least one hydraulic binder and/or latent hydraulic binder, preferably comprises a latent hydraulic binder and a hydraulic binder. A latent hydraulic binder and a hydraulic binder are as described above.

GGBS and Portland cement in this aspect are as described above.

Other embodiments described above also apply to this aspect. In particular it can be advantageous if the hydraulic binder composition additionally comprises at least one of hydrocarboxylic acid, especially lactic acid, sodium nitrate, sodium thiocyanate, and a polycarboxylate ether.

Aggregates can be any material that is non-reactive in the hydration reaction of binders. Aggregates can be any aggregate typically used for construction materials. Typical aggregates are for example rock, crushed stone, gravel, sand, especially quartz sand, river sand and/or manufactured sand. Typically, aggregates are divided in different sieve lines. Often several aggregates of different sieve lines are combined in one hydraulic binder composition. Aggregates may have a particle size of between 0.063 - 32 mm. Preferably, 90% of the aggregates have a particle size of higher than 0.063 mm. It is, for example, possible for a hydraulic binder composition of the present invention to contain sand of particle size 0 - 4 mm and/or gravel of particle size 4 - 8, 8 - 16, and/or 16 - 32 mm.

The term "fillers" refers to calcareous or siliceous materials of fine particle size. A very typical filles is ground limestone. The particle size of fillers is lower than the particle size of aggregates. For example, fillers may have a particle size of below 0.063 mm. Especially, 90% of the fillers have a particle size of lower than 0.063 mm.

Further admixtures in a hydraulic composition of the present invention are admixtures different from triethanolamine and diethanolisopropanolamine. According to embodiments, further admixtures are selected from the group consisting of plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents.

A hydraulic binder composition of the present invention may additionally comprise latent hydraulic binders or pozzolanic binders different from ground granulated steel making slag. Such latent hydraulic or pozzolanic binders are, for example, clay, calcined clay, especially metakaolin, kiln dust, microsilica, fly ash, pyrogenic silica, precipitated silica, silica fume, zeolite, rice husk ash, burnt oil shale, and natural pozzolane such as pumice and trass.

According to embodiments, in a hydraulic binder composition of the present invention, triethanolamine is present in an amount of 0.0025 - 0.25 w%, preferably 0.0025 - 0.01 w% or 0.012 - 0.03 w%, and diethanolisopropanolamine is present in an amount of 0.005 - 0.05 w%, preferably 0.005 - 0.01 w% or 0.01 - 0.04 w%, in each case relative to the total dry weight of the hydraulic binder composition. It has been found that when triethanolamine is dosed in amounts higher than 0.25 w% it acts as a retarder whereas when dosed in amounts as high as 1 w% it acts as a flash setting accelerator.

According to embodiments, a hydraulic binder composition of the present invention comprises
a) a hydraulic binder comprising
a1) 36 - 90 w%, preferably 50 - 80 w%, relative to the total dry weight of the hydraulic binder, of at least one ground granulated blast furnace slag,
a2) 10 - 64 w%, preferably 20 - 50 w%, relative to the total dry weight of the hydraulic binder, of Portland cement,
b) 0.0025 - 0.25 w%, preferably 0.0025 - 0.01 w% or 0.012 - 0.03 w% relative to the total dry weight of the hydraulic binder of triethanolamine,
c) 0.005 - 0.05 w%, preferably 0.005 - 0.01 w% or 0.01 - 0.04 w% relative to the total dry weight of the hydraulic binder, of diethanolisopropanolamine,
d) aggregates and/or fillers, and
e) optionally further admixtures.

Especially, the hydraulic binder composition comprises 10 - 30 w% of the hydraulic binder and 30 - 80 w% of aggregates and/or fillers.

According to embodiments, a hydraulic binder composition of the present invention comprises
a) a hydraulic binder comprising
a1) 50 - 80 w%, relative to the total dry weight of the hydraulic binder, of at least one ground granulated blast furnace slag,
a2) 20 - 50 w%, relative to the total dry weight of the hydraulic binder, of Portland cement,
b) 0.0025 - 0.01 w% relative to the total dry weight of the hydraulic binder of triethanolamine,
c) 0.005 - 0.01 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 50 - 80 w%, relative to the total dry weight of the hydraulic binder, of at least one ground granulated blast furnace slag,
a2) 20 - 50 w%, relative to the total dry weight of the hydraulic binder, of Portland cement,
b) 0.015 - 0.02 w% relative to the total dry weight of the hydraulic binder of triethanolamine,
c) 0.01 - 0.02 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 50 w%, relative to the total dry weight of the hydraulic binder, of at least one ground granulated blast furnace slag,
a2) 50 w%, relative to the total dry weight of the hydraulic binder, of Portland cement,
b) 0.03 w% relative to the total dry weight of the hydraulic binder of triethanolamine,
c) 0.04 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 70 w%, relative to the total dry weight of the hydraulic binder, of at least one ground granulated blast furnace slag,
a2) 30 w%, relative to the total dry weight of the hydraulic binder, of Portland cement,
b) 0.012 w% relative to the total dry weight of the hydraulic binder of triethanolamine,
c) 0.016 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 80 w%, relative to the total dry weight of the hydraulic binder, of at least one ground granulated blast furnace slag,
a2) 20 w%, relative to the total dry weight of the hydraulic binder, of Portland cement,
b) 0.03 w% relative to the total dry weight of the hydraulic binder of triethanolamine,
c) 0.04 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 70 w%, relative to the total dry weight of the hydraulic binder, of at least one ground granulated blast furnace slag,
a2) 30 w%, relative to the total dry weight of the hydraulic binder, of Portland cement,
b) 0.01 w% relative to the total dry weight of the hydraulic binder of triethanolamine,
c) 0.01 w% relative to the total dry weight of the hydraulic binder, of diethanolisopropanolamine,
d) aggregates and/or fillers, and
e) optionally further admixtures.

According to embodiments, a hydraulic binder composition of the present invention comprises
a) a hydraulic binder comprising
a1) 80 w%, relative to the total dry weight of the hydraulic binder, of at least one ground granulated blast furnace slag,
a2) 20 w%, relative to the total dry weight of the hydraulic binder, of Portland cement,
b) 0.015 w% relative to the total dry weight of the hydraulic binder of triethanolamine,
c) 0.02 w% relative to the total dry weight of the hydraulic binder, of diethanolisopropanolamine,
d) aggregates and/or fillers, and
e) optionally further admixtures.

According to embodiments, a hydraulic composition of the present invention additionally contains at least one of sodium thiocyanate, sodium nitrate, hydrocarboxylic acid, especially lactic acid, and polycarboxylate ether.

In another aspect the present invention relates to a wet mortar or concrete consisting of the hydraulic binder composition as described above and water.

A weight ratio of water to hydraulic binder preferably is in the range of 0.2 - 0.6.

In another aspect, the present invention relates to a shaped body obtained by hardening a wet mortar or concrete as described above.

### Examples

The following chemicals were used for the examples. CEM I was Ordinary Portland Cement CEM I according to standard EN 197-1. GGBS was Purfleet from Hanson Cement, UK. Triethanolamine (TEA), Diethanolisopropanolamine (DEIPA), triisopropanolamine (TIPA), N-methyldiethanolamine (MDEA), sodium nitrate, lactic acid, and sodium thiocyanate were purchased from Sigma-Aldrich in high purity and used as received. PCE-based superplasticizer was a Sika ViscoCrete^{®}-10 available from Sika UK.

### Example 1

Mortars were prepared by mixing ground granulated blast furnace slag (GGBS) with the respective type and amount (w% relative to the amount of GGBS) of alkanolamine as indicated in the following table 1 and with water in an amount to realize a weight ratio of GGBS to water of 0.5. The mixing water contained PCE-based superplasticizer (0.5 w% relative to total dry weight of the hydraulic binder).

Mixing was continued for 3 minutes with a Megamixer, followed by 30 seconds intensive mixing by hand.

Slump was measured according to standard EN 12350-2. Compressive strength was measured according to standard EN 12390-3.

**Table 1: Examples 1-1 to 1-3 (not inventive) and 1-4 (inventive)**

| | **1-1** | **1-2** | **1-3** | **1-4** |
|---|---|---|---|---|
| DEIPA [w%] | 0 | 0.02 | 0 | 0.01 |
| TEA [w%] | 0 | 0 | 0.02 | 0.01 |
| Slump [mm] | 180 | 180 | 180 | 180 |
| Compressive strength, 24h [MPa] | 1.1 | 1.7 | 1.7 | 2.0 |
| Compressive strength, 48h [MPa] | 2.3 | 2.8 | 3.5 | 3.6 |
| Compressive strength, 72h [MPa] | 4.1 | 4.3 | 4.3 | 5.1 |
| Compressive strength, 7d [MPa] | 4.5 | 5.1 | 5.1 | 7.6 |

### Example 2

For preparation of mortars, 225 g CEM I, 525 g ground granulated blast furnace slag, 1227 g limestone (10 mm), and 1840 g sand (0-4 mm) were dry mixed for 30 seconds with a Mexamixer. Mixing water (w/c ratio of 0.5), PCE-based superplasticizer (0.5 w% relative to total dry weight of the hydraulic binder), and the respective type and amount of alkanolamines as given in table 2 below (w% relative to the total dry weight of the hydraulic binder) were added and mixing was continued for 3 minutes with a Megamixer, followed by 30 seconds intensive mixing by hand.

Slump and compressive strength were measured as in example 1.

**Table 2: Examples 2-1 to 2-8 (not inventive) and example 2-9 (inventive)**

| | **2-1** | **2-2** | **2-3** | **2-4** | **2-5** | **2-6** | **2-7** | **2-8** | **2-9** |
|---|---|---|---|---|---|---|---|---|---|
| DEIPA [w%] | | 0.02 | | | | 0.01 | | | 0.01 |
| TEA [w%] | | | 0.02 | | | | 0.01 | 0.01 | 0.01 |
| TIPA [w%] | | | | 0.02 | | | 0.01 | | |
| MDEA [w%] | | | | | 0.02 | 0.01 | | 0.01 | |
| Slump [mm] | 200 | 200 | 210 | 210 | 210 | 210 | 200 | 200 | 210 |
| Compressive strength, 24h [MPa] | 4 | 4.4 | 4.4 | 4.8 | 4.6 | 4.5 | 4.6 | 4.2 | 5 |
| Compressive strength, 48h [MPa] | 9.8 | 10.6 | 10.7 | 10.9 | 10.4 | 10.4 | 10.4 | 9.6 | 11.3 |
| Compressive strength, 72h [MPa] | 15.3 | 17.3 | 17.6 | 15.7 | 16.7 | 17.5 | 16.9 | 16.8 | 17.9 |
| Compressive strength, 7d [MPa] | 31.1 | 34.0 | 35.3 | 33.9 | 33.8 | 34.1 | 34.1 | 33.1 | 34.6 |
| Compressive strength, 28d [MPa] | 43.3 | 48.6 | 48.5 | 45.2 | 48.6 | 47 | 49.2 | 45.7 | 49.6 |

### Example 3

For preparation of mortars, the amount of CEM I and of ground granulated blast furnace slag as indicated in below table 3, 1227 g limestone, and 1840 g sand (0-4 mm) were dry mixed for 30 seconds with a Mexamixer. Mixing water, PCE-based superplasticizer (0.5 w% relative to total dry weight of the hydraulic binder), and an admixture comprising TEA (3 w%), DEIPA (4 w%), sodium nitrate (14 w%), lactic acid (4.5 w%), and sodium thiocyanate (21 w%) in water was used in the amount as indicated in below table 3 (relative to the total dry weight of the hydraulic binder). The total w/c ratio was as indicated in below table 3. Mixing was continued for 3 minutes with a Megamixer, followed by 30 seconds intensive mixing by hand.

Slump and compressive strength was measured as for example 2.

**Table 3: Examples 3-1 to 3-7 (inventive)**

| | **3-1** | **3-2** | **3-3** | **3-4** | **3-5** | **3-6** | **3-7** |
|---|---|---|---|---|---|---|---|
| CEM I [g] | 375 | 375 | 150 | 150 | 225 | 150 | 75 |
| GGBS [g] | 375 | 375 | 600 | 600 | 525 | 600 | 675 |
| Admixture [w%] | 0 | 1 | 0 | 1 | 0.4 | 0.2 | 0.2 |
| w/c ratio | 0.43 | 0.43 | 0.43 | 0.43 | 0.5 | 0.5 | 0.5 |
| Slump [mm] | 200 | 160 | 210 | 160 | 200 | 190 | 190 |
| Compressive strength, 24h [MPa] | 9.3 | 13.9 | 4.1 | 2.7 | 3.3 | 2.2 | 0 |
| Compressive strength, 48h [MPa] | 23.3 | 27.2 | 13.8 | 11.5 | 7.4 | 5.7 | 2.6 |
| Compressive strength, 72h [MPa] | n.m. | n.m. | n.m. | n.m. | 14 | 11 | 6.1 |
| Compressive strength, 7d [MPa] | 54.1 | 61.5 | 44.5 | 47.3 | 36.8 | 28.3 | 14.2 |
| Compressive strength, 28d [MPa] | 74.9 | 80.3 | 59.4 | 62.1 | 51.2 | 42.2 | 26.7 |
| Compressive strength, 56d [MPa] | 82.3 | 84.1 | 63.3 | 69.7 | 63.1 | 48.1 | 33.1 |

| | | | | | | | |
|---|---|---|---|---|---|---|---|
| n.m.: not measured | | | | | | | |

### Example 4

Mortars for example 4 were prepared in the same way as in example 3. The following table 4 shows details about the respective mixes and results measured. For the mortars of example 4, the amounts of TEA and DEIPA in the admixture were varied as indicated in the following table 4.

**Table 4: Examples 4-1 to 4-5 (inventive)**

| | **4-1** | **4-2** | **4-3** | **4-4** | **4-5** |
|---|---|---|---|---|---|
| CEM I [g] | 150 | 150 | 150 | 150 | 150 |
| GGBS [g] | 600 | 600 | 600 | 600 | 600 |
| TEA in admixture [w%] | 3 | 1 | 0.5 | 1 | 0.5 |
| DEIPA in admixture [w%] | 4 | 2 | 1 | 2 | 1 |
| Admixture dosage [w%] | 0.5 | 0.5 | 0.5 | 1.0 | 1.0 |
| w/c ratio | 0.5 | 0.5 | 0.5 | 0.5 | 0.5 |
| Slump [mm] | 160 | 150 | 150 | 150 | 150 |
| Compressive strength, 24h [MPa] | 2.2 | 3.4 | 4.0 | 2.8 | 3.7 |
| Compressive strength, 48h [MPa] | 9.3 | 11.8 | 11.7 | 10.8 | 11.7 |
| Compressive strength, 7d [MPa] | 46 | 40 | 39.4 | 42.9 | 40.4 |
| Compressive strength, 28d [MPa] | 63.4 | 53.6 | 55.1 | 60.3 | 55.9 |

## Claims

1. A method for activating ground granulated blast furnace slag, said method comprising the steps of
a) providing a ground granulated blast furnace slag,
b) providing an admixture comprising triethanolamine and diethanolisopropanolamine, and
c) mixing said ground granulated blast furnace slag and said admixture.

2. A method as claimed in claim 1, **characterized in that** the ground granulated blast furnace slag forms part of a hydraulic binder.

3. A method as claimed in claim 2, **characterized in that** the hydraulic binder comprises or consists of ground granulated blast furnace slag and Portland cement, especially CEM I according to EN 197-1.

4. A method as claimed in at least one of claims 2-3, **characterized in that** a ratio of ground granulated blast furnace slag in said hydraulic binder is at least 36 w%, preferably at least 50 w%, more preferably at least 70 w%, especially at least 80 w%, relative to the total dry weight of the hydraulic binder.

5. A method as claimed in at least one of claims 2-4, **characterized in that** a ratio of ground granulated blast furnace slag in said hydraulic binder is not more than 90 w%, preferably not more than 80 w%, relative to the total dry weight of the hydraulic binder.

6. A method as claimed in at least one of the claims 1 - 5, **characterized in that** the admixture additionally comprises at least one of sodium thiocyanate, sodium nitrate, hydrocarboxylic acid, especially lactic acid, and polycarboxylate ether.

7. An admixture for use in a method as claimed in at least one of the preceding claims, said admixture comprising triethanolamine and diethanolisopropanolamine.

8. The admixture as claimed in claim 7, **characterized in that** the weight ratio of triethanolamine to diethanolisopropanolamine is between 10:1 - 1:10, preferably between 3:1 - 1:3, especially is 3:4.

9. An admixture as claimed in at least one of claims 7-8, additionally comprising at least one of calcium nitrite, calcium nitrate, calcium chloride, sodium thiocyanate, alkali metal silicate, alkali metal hydroxide, alkali metal carbonate, aluminum sulfate, hydroxycarboxylic acid, especially citric acid, lactic acid, or tartaric acid, sodium gluconate, and water.

10. A hydraulic binder composition comprising
(a1) at least one ground granulated blast furnace slag,
(a2) optionally Portland cement,
(b) triethanolamine,
(c) diethanolisopropanolamine,
(d) optionally aggregates and/or fillers, and
(e) optionally further admixtures.

11. The hydraulic binder composition as claimed in claim 10, **characterized in that** triethanolamine is present in an amount of 0.0025 - 0.25 w%, preferably 0.0025 - 0.01 w% or 0.012 - 0.03 w%, and that diethanolisopropanolamine is present in an amount of 0.005 - 0.05 w%, preferably 0.005 - 0.01 w% or 0.01 - 0.04 w%, in each case relative to the total dry weight of the hydraulic binder composition.

12. The hydraulic binder composition as claimed in at least one of claims 10- 11, **characterized in that** it comprises
a) a hydraulic binder comprising
a1) 36 - 90 w%, preferably 50 - 80 w%, relative to the total dry weight of the hydraulic binder, of at least one ground granulated blast furnace slag,
a2) 10 - 64 w%, preferably 20 - 50 w%, relative to the total dry weight of the hydraulic binder, of Portland cement,
b) 0.0025 - 0.25 w%, preferably 0.0025 - 0.01 w% or 0.012 - 0.03 w% relative to the total dry weight of the hydraulic binder of triethanolamine,
c) 0.005 - 0.05 w%, preferably 0.005 - 0.01 w% or 0.01 - 0.04 w% relative to the total dry weight of the hydraulic binder, of diethanolisopropanolamine,
d) aggregates and/or fillers, and
e) optionally further admixtures.

13. The hydraulic binder composition as claimed in at least one of claims 10- 12, **characterized in that** it additionally contains at least one of sodium thiocyanate, sodium nitrate, hydrocarboxylic acid, especially lactic acid, and polycarboxylate ether.

14. A wet mortar or concrete consisting of the hydraulic binder composition as claimed in at least one of claim 10 - 13 and water.

15. A shaped body obtained by hardening a wet mortar or concrete as claimed in claim 14.
